# FASCICULE DE BREVET EUROPEEN

(11) **EP 3 492 791 B1**
(45) Date de publication et mention de la délivrance du brevet: **17.11.2021**
(21) Numéro de dépôt: 18208926.8
(22) Date de dépôt: 28.11.2018
(51) Int. Cl.: F16L 3/01, F16G 13/16, F16L 3/015, F16L 3/26, G02B 6/44, H02G 3/04, H02G 11/00, A47B 21/06, F16L 57/06, F16L 57/02, F16L 11/22, F16L 11/18, A47B 97/00

(54) **CONDUIT FLEXIBLE**
FLEXIBLE ROHRLEITUNG
FLEXIBLE CONDUIT

(30) Priorité: 29.11.2017 FR 1761381
(43) Date de publication de la demande: 05.06.2019
(73) Titulaire: Legrand France, 87000 Limoges (FR); Legrand SNC, 87000 Limoges (FR)
(72) Inventeur: JARRY, Patrice, 72140 Mont Saint Jean (FR); ROBIDAS, Arnaud, 72240 Conlie (FR)
(74) Mandataire: Jacobacci Coralis Harle

(56) Documents cités:
- DE-A1- 19 837 231
- DE-A1-102007 017 940
- JP-A- 2007 135 322

## Description

### DOMAINE TECHNIQUE AUQUEL SE RAPPORTE L'INVETION

La présente invention concerne de manière générale les conduits flexibles du type de ceux mis en oeuvre pour le logement et la protection des fils et/ou des câbles électriques isolés et/ou des fibres optiques.

L'invention trouve une application particulièrement avantageuse dans la réalisation d'un conduit qui permet de guider des câbles électriques ou des fibres optiques pour alimenter par le plafond une colonne s'élevant perpendiculairement audit plafond, sans avoir à orienter ladite colonne, ni à suspendre ledit conduit le long de son trajet entre le point de sortie des câbles ou des fibres au plafond et le point d'entrée de ces câbles ou fibres dans la colonne.

Toutefois l'invention peut être également appliquée à tout type de conduits électriques ou optiques.

Plus particulièrement, l'invention porte sur un conduit flexible s'étendant en longueur selon un axe longitudinal, en hauteur suivant un premier axe transversal et en largeur suivant un deuxième axe transversal, ces trois axes étant perpendiculaires entre eux, et comprenant au moins un élément longitudinal monobloc formé d'une enveloppe externe délimitant un espace intérieur et d'au moins une cloison intérieure qui, en hauteur, s'élève selon ledit premier axe transversal et qui sépare, selon ledit axe longitudinal, ledit espace intérieur en deux compartiments longitudinaux pour le logement d'éléments allongés tels que des fils ou des câbles électriques isolés et/ou des fibres optiques.

### ARRIERE-PLAN TECHNOLOGIQUE

On connaît déjà notamment des documents DE 44 28 680, JP2007135321, JP2007135322 et JP2007135323, des conduits du type précité comprenant des modules rigides indépendants, assemblés mécaniquement entre eux par des liaisons rotules permettant d'orienter lesdits modules rigides les uns par rapport aux autres pour définir le trajet courbe des conduits.

L'inconvénient majeur de ce type de conduits réside dans l'assemblage mécanique des modules rigides indépendants, qui complique la fabrication du conduit et en augmente le coût de fabrication. En outre, dans ces conduits, les liaisons rotules peuvent se dégrader ou céder.

On connaît par ailleurs du document US 5 900 586 un autre conduit du type précité comprenant des modules rigides traversés en leur centre par une gaine flexible à laquelle ils sont rattachés à l'aide de rivets. Ici, la gaine flexible sert de jonction entre les modules rigides et permet d'orienter lesdits modules rigides les uns par rapport aux autres pour définir le trajet courbe du conduit.

Un tel conduit est également très complexe à fabriquer car il nécessite l'assemblage de plusieurs pièces indépendantes et des opérations de rivetage. En outre, la gaine flexible est un élément fragile qui peut être percé ou se déchirer.

On connaît du document EP 1 394 915 un conduit flexible comprenant des modules rigides assemblés entre eux au moyen d'un lien flexible indépendant, engagé à force ou encliqueté dans un aménagement externe desdits modules rigides.

Un tel conduit est fragile et peu fiable.

Enfin, on connaît du document DE19837231 un conduit de cheminement de câbles, monobloc, présentant un espace intérieur séparé en deux parties par une paroi interne longitudinale. Selon ce document, d'une part, des encoches, prévues dans les parois externes du conduit, permettent de former des segments de conduit articulés les uns par rapport aux autres, et, d'autre part, il est prévu dans la paroi externe de chaque couple de segments de conduit voisins, un agencement de coulisseau coulissant dans une coulisse de sorte que le conduit est flexible autour d'un seul axe et est adapté à suivre un trajet courbe dans un plan perpendiculaire à cet axe.

Dans ce conduit, la paroi interne est fabriquée en un matériau capable de fléchir globalement pour autoriser la courbure dudit conduit.

Un tel conduit est donc particulièrement complexe à réaliser d'une seule pièce par moulage. En outre, l'agencement de coulisseau coulissant dans une coulisse n'est pas fiable. Il peut se bloquer ou coincer de sorte que le conduit n'est pas facilement manipulable.

### OBJET DE L'INVENTION

Afin de remédier aux inconvénients précités de l'état de la technique, l'invention propose un conduit flexible selon la revendication 1.

Un tel conduit est particulièrement pratique à utiliser et économique à fabriquer notamment par moulage d'une matière plastique.

D'autres caractéristiques non limitatives et avantageuses du conduit conforme à l'invention, prises individuellement ou selon toutes les combinaisons techniquement possibles, sont énoncées dans les revendications 2 à 8.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective de l'extérieur d'un mode de réalisation préférentiel d'un conduit conforme à l'invention ;
- la figure 2 est une vue schématique de l'intérieur du conduit de la figure 1 ;
- la figure 3 est une vue schématique de côté du conduit de la figure 1 ;
- la figure 4 est une vue de face du conduit de la figure 1 ;
- la figure 5 est une vue en coupe selon le plan E-E de la figure 4 ;
- la figure 6 est une vue en coupe selon le plan A-A de la figure 3 ;
- la figure 7 est une vue en coupe selon le plan B-B de la figure 3 ;
- la figure 8 est une vue schématique partielle de côté de deux éléments longitudinaux du conduit selon l'invention, placés en vis-à-vis pour être assemblés ;
- la figure 9 est une vue schématique en perspective d'un conduit conforme à l'invention en cours d'assemblage de tronçons d'éléments longitudinaux ;
- la figure 10 est une vue schématique de dessus de deux extrémités d'éléments longitudinaux d'un conduit selon l'invention, prêts à être accouplés suivant l'axe longitudinal X ;
- la figure 11 est une vue schématique partielle en perspective d'une colonne télescopique équipée d'un conduit selon l'invention orienté suivant trois orientations différentes ;
- la figure 12 est une vue de dessus de la figure 11 ;
- la figure 13 est une vue schématique partielle en perspective d'une autre colonne équipée d'un conduit selon l'invention raccordé à un faux plafond ;
- la figure 14 est une vue de détail du raccordement du conduit de la figure 13 au faux plafond ;
- la figure 15 est une vue de face dans un plan P2 du raccordement d'une colonne à un faux plafond via un conduit selon l'invention ;
- la figure 16 est une vue en perspective éclatée de l'extrémité supérieure de la colonne de la figure 13 ou de la figure 15 et du conduit selon l'invention ; et
- les figures 17 et 18 montrent deux étapes d'assemblage du conduit selon l'invention et de la colonne de la figure 13 ou de la figure 15.

En préliminaire, on notera que les termes « vertical(e) » et horizontal(e) » seront utilisés dans la suite du texte pour définir une direction respectivement perpendiculaire et parallèle à un plafond d'une pièce d'installation.

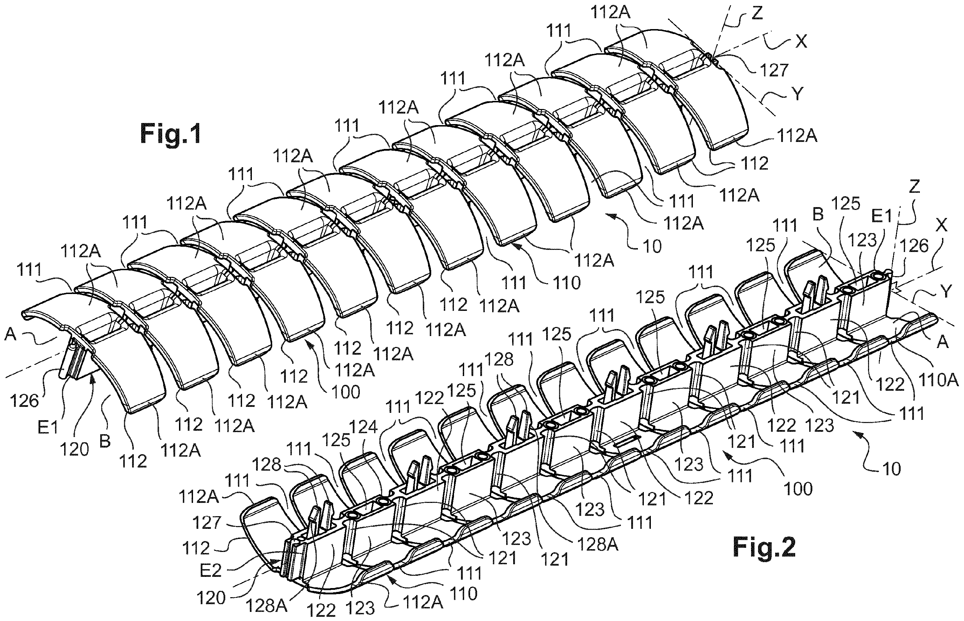

Sur les figures 1 à 10 on a représenté un mode de réalisation préférentiel d'un conduit 10 pour le logement, le guidage et la protection de divers éléments allongés tels que des fils ou des câbles électriques isolés ou des fibres optiques.

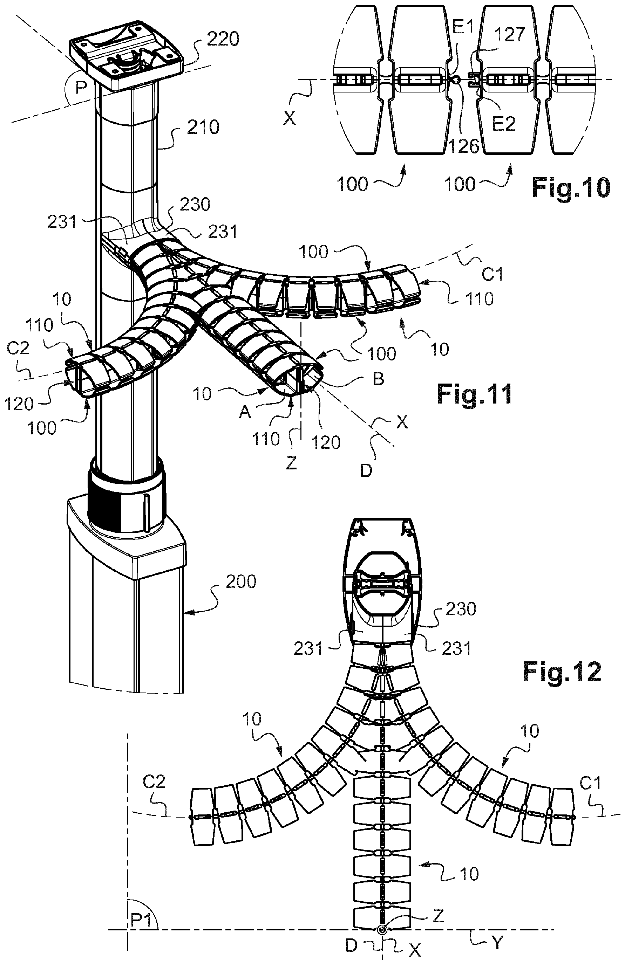

Ce conduit 10 est un conduit flexible dans la mesure où, comme le montrent les figures 11, 12, 13 et 15, il est capable d'être déformé élastiquement pour suivre différents trajets courbes C1, C2, C3 dans un plan horizontal P1 ou vertical P2.

Comme le montrent les figures 11, 12, 13 et 15, un tel conduit 10 est particulièrement adapté à établir une jonction souple de guidage et de support de câbles électriques ou de fibres optiques entre une colonne 200 ; 300 verticale et un réseau de câbles électriques ou de fibres optiques (non représenté) qui court au plafond de sorte qu'il est possible d'alimenter en câbles ou en fibres optiques une telle colonne 200 ;300 sans avoir à l'orienter, ni à suspendre ledit conduit 10 le long de son trajet entre le point de sortie des câbles ou des fibres au plafond et le point d'entrée de ces câbles ou fibres dans la colonne 200 ; 300.

Comme le montrent plus particulièrement les figures 1 à 5, le conduit 10 s'étend en longueur selon un axe longitudinal X, en hauteur suivant un premier axe transversal Z et en largeur suivant un second axe transversal Y, ces trois axes étant perpendiculaires entre eux.

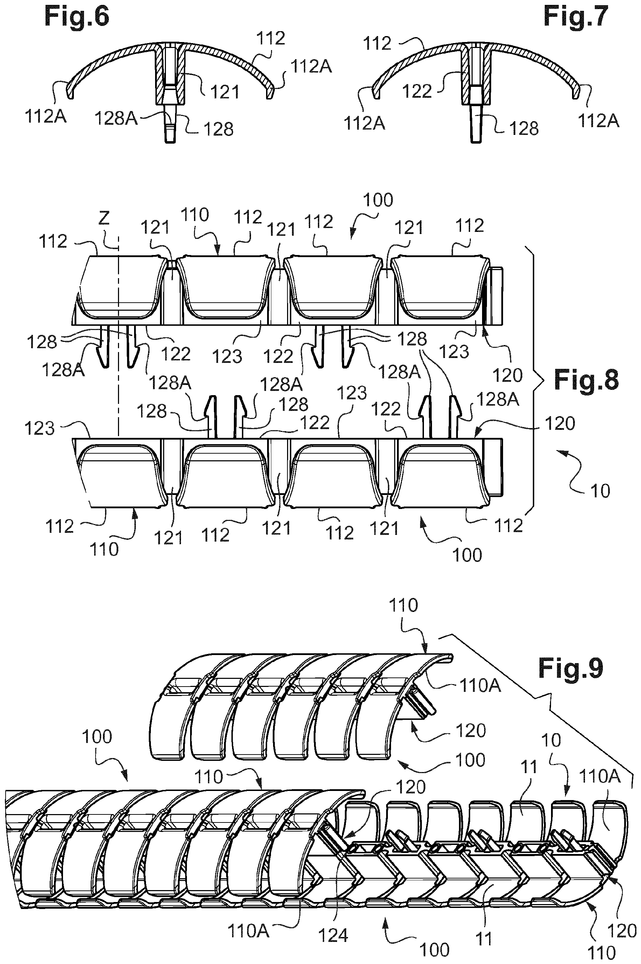

Pour l'essentiel, il comprend au moins un élément longitudinal 100, monobloc, formé d'une enveloppe externe 110 délimitant un espace intérieur 11 (voir figure 9) et d'au moins une cloison intérieure 120 qui, en hauteur, s'élève selon ledit premier axe transversal Z et qui sépare, selon ledit axe longitudinal X, ledit espace intérieur en deux compartiments longitudinaux A, B pour le logement, le guidage et la protection des fils ou des câbles électriques isolés et/ou des fibres optiques.

La cloison intérieure 120 s'élève à partir d'une région centrale de la face interne 110A de ladite enveloppe externe 110 et elle court d'un bout à l'autre de cette enveloppe de sorte qu'elle sépare en deux parties identiques tout l'espace intérieur dudit conduit 10.

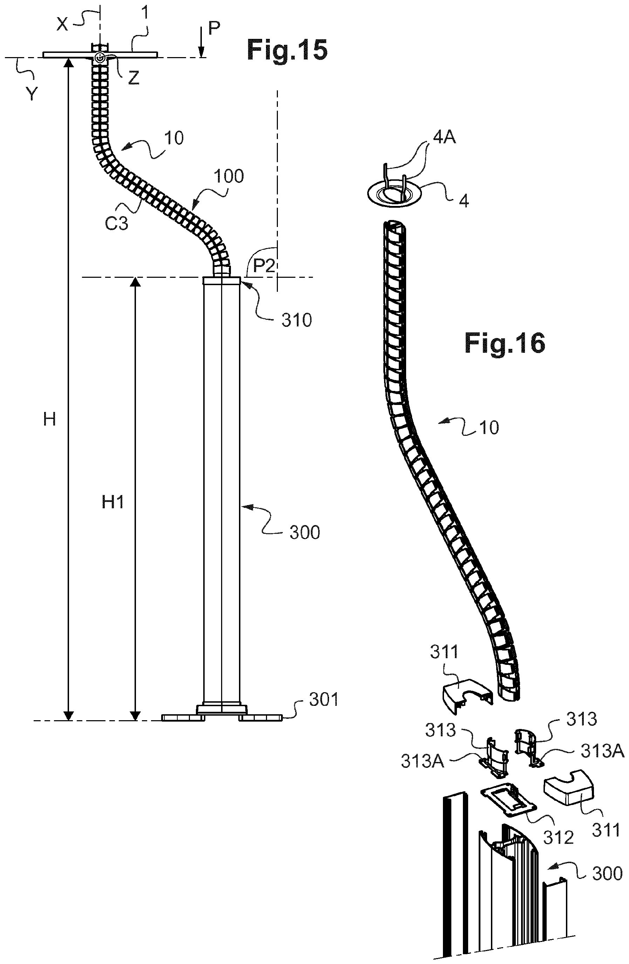

De manière remarquable, le long dudit axe longitudinal X, chaque élément longitudinal 100 est flexible autour dudit premier axe transversal Z et est rigide autour de l'axe longitudinal X et du second axe transversal Y de sorte que ledit élément longitudinal 100 est adapté à suivre un trajet courbe C1 ; C2 ; C3 situé dans un plan P1 ; P2 perpendiculaire audit premier axe transversal Z (voir les figures 12 et 15).

L'élément longitudinal 100 est avantageusement réalisé d'une seule pièce par injection et moulage d'une matière plastique plus ou moins rigide tel que du polypropylène.

La rigidité de l'élément longitudinal 100 du conduit 10 autour des axes X et Y, l'empêche d'être déformé dans un espace à trois dimensions. L'élément longitudinal 100 du conduit 10 ne peut alors être déformé que dans un plan horizontal P1 (voir figure 12) ou vertical P2 (voir figure 15) en fonction du lieu d'attache de cet élément longitudinal 100 du conduit 10 à un autre élément, ici une colonne 200, 300 verticale représentée sur les figures 12 et 15.

Comme le montrent plus particulièrement les figures 11 et 12, lorsque le lieu d'attache 210 de l'élément longitudinal 100 du conduit 10 à la colonne 200 est situé dans un plan vertical (par rapport à ladite colonne placée verticalement en position d'utilisation comme cela est représenté sur la figure 11), alors le plan P1 dans lequel l'élément longitudinal 100 du conduit 10 suit le trajet courbe C1 ou C2 est un plan horizontal (soit un plan perpendiculaire à l'axe de la colonne).

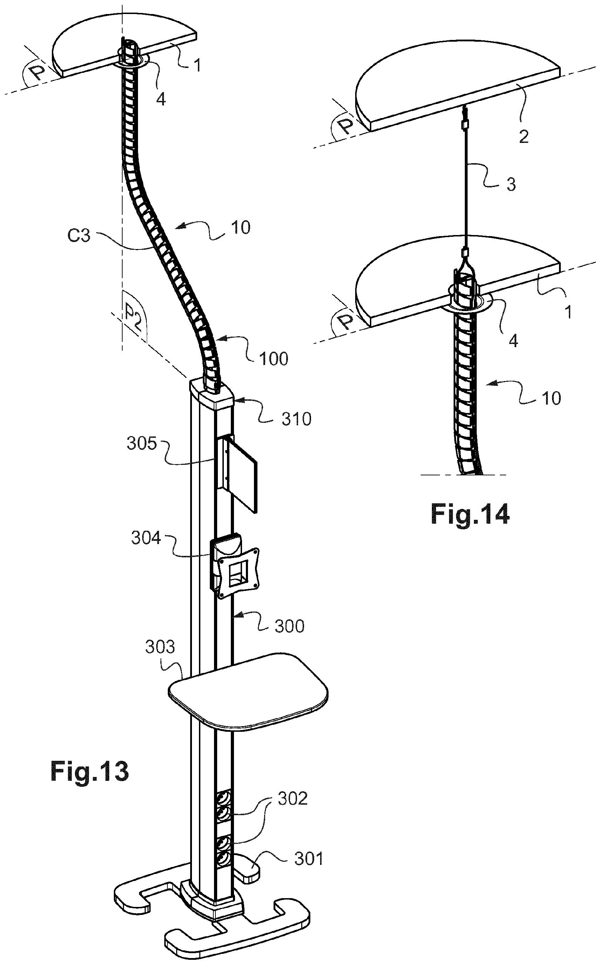

Par contre, comme le montre plus particulièrement les figures 13 et 15, lorsque le lieu d'attache 310 de l'élément longitudinal 100 du conduit 10 à la colonne 300 est situé dans un plan horizontal (par rapport à ladite colonne placée verticalement en position d'utilisation comme cela est représenté sur la figure 13), alors le plan P2 dans lequel l'élément longitudinal 100 du conduit 10 suit le trajet courbe C3 est un plan vertical (soit un plan parallèle à l'axe de la colonne).

Avantageusement, ladite enveloppe externe 110 et ladite cloison intérieure 120 de l'élément longitudinal 100 monobloc, comportent plusieurs zones de flexibilité ici régulièrement réparties le long dudit axe longitudinal X.

Comme le montrent les figures 1, 2 et 4, lesdites zones de flexibilité de ladite enveloppe externe110 sont formées par des encoches 111 orientées selon ledit second axe transversal Y.

Comme le montrent les figures 2, 3, 4 et 5, lesdites zones de flexibilité de ladite cloison intérieure 120 sont formées par des amincissements de paroi 121 s'étendant sur toute la hauteur de ladite cloison intérieure 120.

Les encoches 111 de l'enveloppe externe 110 sont placées en regard des amincissements de paroi 121 de la cloison intérieure 120 sorte que l'élément longitudinal 100 comporte une série monobloc de vertèbres liées entre elles par des charnières flexibles formées par lesdits amincissements de paroi 121.

Plus particulièrement, comme le montre plus particulièrement la figure 2, la cloison intérieure 120 comprend une série monobloc de chaînons 122, 123 liés par les amincissements de paroi 121 formant des liaisons charnières entre lesdits chaînons 122, 123.

En outre, ladite enveloppe externe 110 présente ici un profil courbe suivant un arc de cercle et forme des ailes courbes de part et d'autre de ladite cloison intérieure 110. Ces ailes sont entrecoupées par les encoches 111 si bien que pour chaque chaînon 122, 123 de la cloison intérieure 120 correspond une portion 112 d'enveloppe externe 110 comportant deux ailes 112A courbes s'étendant de part et d'autre dudit chaînon 122, 123 (voir figures 1, 2 et 4).

Chaque portion 112 d'enveloppe externe 110 et chaque chaînon 122, 123 associé de la cloison intérieure 120 dudit élément longitudinal 100, forme une desdites vertèbres de cet élément longitudinal 110 liée à une autre vertèbre par un amincissement de paroi 121 de ladite cloison intérieure 120.

L'élément longitudinal 100 du conduit 10 représenté sur les figures 1 à 5 présente une longueur L d'un module d'environ 300 millimètres pour une douzaine de vertèbres liées entre elles par des charnières. Selon l'axe longitudinal X, chaque vertèbre présente une longueur d'environ 20 millimètres et chaque charnière s'étend sur environ 5 millimètres. Comme le montre la figure 9, l'élément longitudinal 100 du conduit 10 peut présenter une longueur d'un demi-module d'environ 150 millimètres pour six vertèbres liées entre elles par des charnières.

Bien entendu, on peut envisager, selon l'invention, toute autre longueur d'élément longitudinal 100.

Bien entendu également, on peut prévoir, sans sortir du cadre de l'invention, que l'enveloppe externe du conduit présente un profil à angles droits du type profil en U.

Selon une autre caractéristique avantageuse, comme le montrent les figures 2, 4 et 10, ladite cloison intérieure 120 de l'élément longitudinal 100, comporte à chacune de ses deux extrémités E1, E2, des moyens d'accouplement selon ledit axe longitudinal X à une cloison intérieure d'un autre élément longitudinal 100 du même type.

Ces moyens d'accouplement sont des moyens d'emboîtage 126, 127. Ils comprennent, à une extrémité E1, un pilier 126 cylindrique et, à l'autre extrémité E2, un manchon cylindrique 127 (ouvert sur sa hauteur) dont les dimensions internes correspondent, au jeu près, aux dimensions externes dudit pilier 126.

Comme le montre plus particulièrement la figure 10, pour allonger le conduit 10, il est possible d'engager manuellement, par simple coulissement suivant l'axe longitudinal Z, le pilier 126 d'un élément longitudinal 100 dans le manchon cylindrique 127 d'un autre élément longitudinal 100.

Comme le montrent plus particulièrement les figures 8, 9, 11 et 13, avantageusement, le conduit 10 comporte au moins deux éléments longitudinaux 100 monoblocs placés en vis-à-vis et assemblés par des moyens d'assemblage qui s'étendent selon ledit premier axe transversal Z de sorte que lesdites cloisons intérieures 120 desdits éléments longitudinaux 100 se raccordent par leur tranche longitudinale 124.

Préférentiellement, comme le montre la figure 9, le conduit 10 comporte deux éléments longitudinaux 100 d'un module (ici comprenant douze vertèbres et présentant une longueur d'environ 300 millimètres) placés en vis-à-vis mais décalés d'un demi-module (ici d'environ 150 millimètres) de sorte que les tranches longitudinales 124 des cloisons intérieures 120 de ces éléments longitudinaux 100 sont jointives sur la longueur d'un demi-module et les extrémités E1, E2 de ces cloisons intérieures 120 ne sont pas positionnées en vis-à-vis, ce qui augmente la rigidité du conduit assemblé. Deux éléments longitudinaux 100 d'un demi-module (ici comprenant six vertèbres et présentant une longueur d'environ 150 millimètres) sont assemblés aux éléments longitudinaux 100 d'un module, de part et d'autre des parties jointives de ces deux éléments longitudinaux 100 d'un module.

Lorsque les éléments longitudinaux 100 sont assemblés, les enveloppes externes 110 forment une seule enveloppe, au profil elliptique ou oblong, ouverte à chaque extrémité et localement le long de l'axe longitudinal X par les encoches 111. Cette enveloppe externe délimite un espace intérieur 11 séparé en son milieu par une seule cloison intérieure centrale (formée par les deux cloisons intérieures 120 superposées) qui s'étend sur tout la hauteur dudit espace intérieur et sur toute sa longueur pour former les deux compartiments longitudinaux A, B (voir figure 11). Un tel conduit 10 présente une succession de vertèbres au contour elliptique, jointes par des charnières formées par les amincissements de paroi 121 de la cloison intérieure centrale.

Ici, lesdits moyens d'assemblage qui s'étendent selon ledit premier axe transversal Z, sont des moyens d'encliquetage 128A, 125A issus de chaque cloison intérieure 120

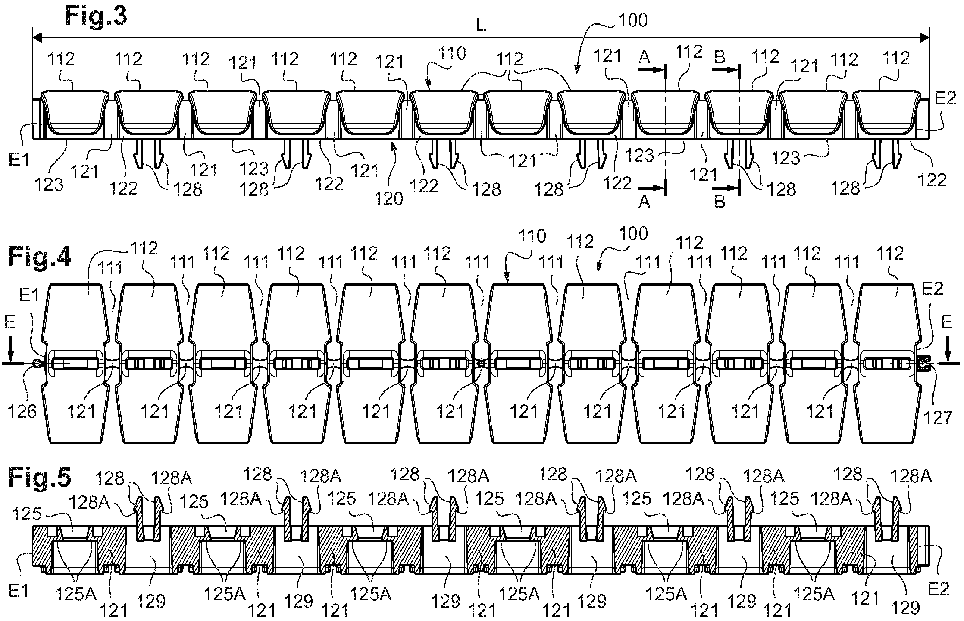

Comme le montrent les figures 2, 5, 6, 7.et 8, pour chaque cloison intérieure 120 de chaque élément longitudinal 100, un chaînon 122 sur deux de comporte une paire de pattes d'encliquetage 128 qui s'étendent en saillie de la tranche longitudinale 124 de ladite cloison 120 et un chaînon 123 sur deux comporte un logement 125 débouchant sur la tranche longitudinale 124 de ladite cloison et muni intérieurement de bords d'accrochage 125A pour la paire de pattes d'encliquetage 128. Chaque patte d'encliquetage 128 porte à son extrémité libre une dent d'encliquetage 128A et chaque paire de pattes d'encliquetage 128 est attachée à la paroi d'un logement 129 prévu dans le chaînon 122 correspondant de chaque cloison intérieure 120 (voir figure 5).

Vu en coupe, comme le montre la figure 5, chaque logement 125 présente une entrée en forme d'entonnoir qui débouche sur les bords d'accrochage 125A. Cette entrée en forme d'entonnoir facilite l'insertion des pattes d'encliquetage 128 et provoque leur déformation élastique pour l'accrochage de leur dent d'encliquetage 128A sur lesdits bords d'accrochages 125A.

Il convient de noter que l'encliquetage des pattes d'encliquetage 128 dans les logements 125 est réalisé de telle manière que l'on peut aisément manuellement assembler et désassembler plusieurs fois les éléments longitudinaux 100 dudit conduit 10.

Comme le montrent plus particulièrement les figures 8 et 9, pour assembler manuellement les éléments longitudinaux 100 afin de former un conduit 10 au profil oblong du type de ceux représentés sur les figures 11 et 13, il suffit de présenter les éléments longitudinaux 100 en vis-à-vis selon le premier axe transversal Z avec les pattes d'encliquetage 128 de l'un en regard des logements 125 d'encliquetage de l'autre, puis d'engager lesdites pattes d'encliquetage 128 dans lesdits logements 125 d'encliquetage jusqu'à ce que les dents d'encliquetage 128A s'accrochent sur les bords d'accrochage 125A. La longueur des pattes d'encliquetage 128 et la position des bords d'accrochage 125A sont prévus de sorte que, après accrochage, d'une part, lesdites cloisons intérieures 120 sont jointes au moins sur une partie de leur longueur (par leur tranche longitudinale 124), et sont alignées suivant leur hauteur, et, d'autre part, les bords d'extrémités des ailes 112A des enveloppes externes 110 sont jointifs ou pratiquement jointifs.

Comme le montre la figure 9, lorsque l'on encliquette un élément longitudinal 100 d'un demi-module sur un élément longitudinal 100 d'un module, simultanément on engage par simplement coulissement selon ledit premier axe transversal Z, le pilier 126 d'un desdits éléments longitudinaux dans le manchon cylindrique 127 de l'autre élément longitudinal.

Les figures 11 et 12 montrent une première utilisation du conduit 10, selon l'invention, qui vient d'être décrit. Il s'agit d'établir, à proximité d'un plafond, une jonction souple entre l'intérieur d'une colonne 200 de cheminement de câbles et ou de fibres optiques, et l'intérieur d'un chemin de câbles (non représenté) fixé au plafond (également non représenté).

La colonne 200 s'étend verticalement entre le sol et le plafond (matérialisé par le plan P). Elle comporte une partie télescopique 210 munie à son extrémité d'une plateforme 220 de fixation au plafond. Cette partie télescopique 210 comporte sur un de ses côtés verticaux une sortie vers l'extérieur équipée d'un manchon 230 qui enserre une extrémité ouverte du conduit 10. Le manchon 230 est constitué de deux coques 231 assemblées autour de ladite extrémité ouverte du conduit 10 de sorte que l'espace intérieur du conduit 10 communique avec l'espace intérieur de la partie télescopique 210 de la colonne 200. Le manchon 230 maintient aisément le conduit 10 selon la direction D sans que celui ne fléchisse vers le sol du fait de la rigidité dudit conduit 10. Toutefois avantageusement, grâce à la flexibilité du conduit 10, autour du premier axe transversal Z, il est possible de courber ledit conduit 10 de selon l'arc de cercle C1 ou C2 dans un plan P1 parallèle au plan P du plafond (perpendiculaire à l'axe Z) de sorte que l'autre extrémité ouverte dudit conduit 10 atteigne le chemin de câbles fixé au plafond et positionné de manière décalée par rapport à ladite colonne 200.

Le conduit 10 permet d'établir une jonction de câbles et ou de fibres optiques entre la colonne 200 et le chemin de câbles sans devoir orienter ladite colonne, ni suspendre ledit conduit 10.

Les figures 13 à 18 montrent une deuxième utilisation du conduit 10, selon l'invention, qui vient d'être décrit. Il s'agit d'établir, à proximité d'un faux plafond 1, une jonction souple entre l'intérieur d'une colonne 300 de cheminement de câbles et ou de fibres optiques, et l'espace intérieur prévu entre un plafond 2 et le faux plafond 1 parallèles.

La colonne 300 s'élève verticalement depuis le sol sur une hauteur H1 (inférieure à la hauteur H sous faux plafond 1) en direction du faux plafond 1. Une de ses extrémités est montée dans une embase 301 qui repose sur le sol. L'autre de ses extrémités 310 est fermée par un capot 311, et est placée à distance du faux plafond 1.

Comme le montre la figure 13, la colonne 300 peut supporter différents appareillages électriques 302, 304, 305 et accessoire 303, qu'il convient d'alimenter électriquement par des câbles issus d'un réseau de gaines électriques (non représentées) circulant dans l'espace intérieur prévu entre le plafond 2 et le faux plafond 1.

Le conduit 10 selon l'invention va alors permettre d'établir une jonction entre le point de sortie des câbles du faux plafond 1 (point de sortie décalé par rapport à l'axe de la colonne) et l'espace intérieur de la colonne 300 sans devoir orienter ladite colonne ou suspendre ledit conduit 10.

Une des extrémités ouvertes du conduit 10 est engagée au travers d'une bague de finition 4, puis suspendue au plafond 2 par exemple au moyen d'un filin 3. Des câbles électriques ou des fibres optiques, tirés de gaines circulant derrière le faux plafond 1, peuvent être enfilés via cette extrémité suspendue dans le conduit 10. Ladite extrémité suspendue du conduit 10 est engagée dans une ouverture circulaire du faux plafond 1 (cette ouverture constitue le point de sortie du faux plafond). Lors de cet engagement, on accroche ou on coince des pattes élastiques 4A de la bague de finition 4 dans ladite ouverture circulaire du faux plafond 1 pour plaquer la bague de finition 4 contre la face du faux plafond tournée vers le sol, autour dudit conduit 10, afin de parfaire l'esthétique de la jonction conduit 10/ faux plafond 1.

L'autre extrémité ouverte du conduit 10 est raccordée à l'extrémité 310 de la colonne 300 pour que le conduit 10 débouche dans ladite colonne 300.

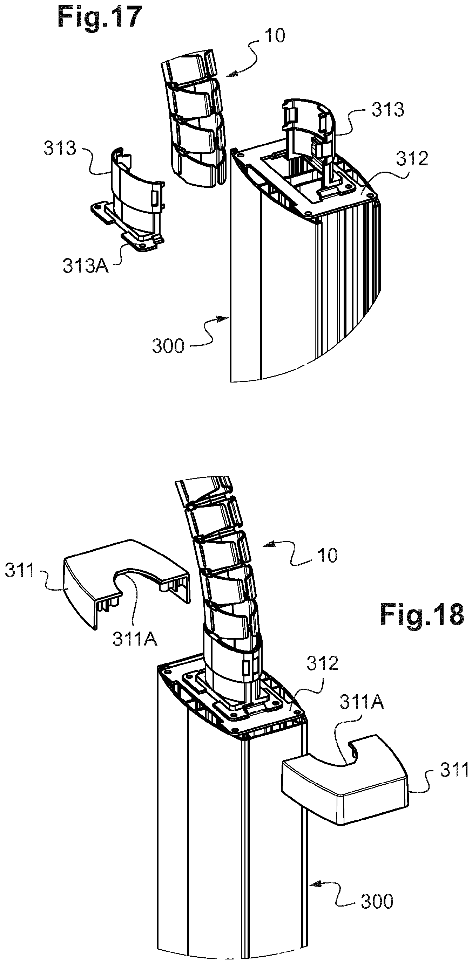

Pour cela, comme le montrent les figures 16 à 18, il est prévu un support 312 monté à l'extrémité du socle de la colonne 300 (figure 17). Deux coques 313 qui enserrent ladite extrémité du conduit 10 sont fixées sur ce support 312 de telle manière qu'au niveau de ladite extrémité ouverte du conduit 10, l'axe longitudinal du conduit 10 s'étend sensiblement selon l'axe de ladite colonne 300. Les deux coques 313 sont accrochées l'une à l'autre autour dudit conduit 10, pour former un manchon de sortie, et elles comportent des pieds 313A de montage sur le support 312 (figures 17 et 18). Deux parties d'un capot 311 sont rapportés sur l'extrémité 310 de la colonne 300 par-dessus le support 312, autour du conduit 10. Chaque partie de capot 311 comporte un encoche 311A dont la forme épouse un demi contour du conduit 10.

Entre ses deux extrémités (fixées d'une part au faux plafond 1 et d'autre part à l'extrémité de la colonne 300) le conduit 10 suit un trajet courbe ou ondulé C3 situé dans un plan P2 perpendiculaire au plan P du plafond 2 et du faux plafond 1. On notera que pour une hauteur H standard sous faux plafond, le conduit 10 présente avantageusement une longueur de 1,8 mètres ce qui correspond à 6 longueurs d'éléments longitudinaux 100 d'un module (de longueur 300 millimètres). Un tel conduit 10 est préférentiellement constitué de 11 éléments longitudinaux 100 d'un module assemblés en quinconce ou de manière décalée et de 2 éléments longitudinaux 100 d'un demi-module (de longueur 150 millimètres) assemblés aux parties d'extrémité libres desdits éléments longitudinaux 100 d'un module (comme le montre la figure 9).

La présente invention n'est nullement limitée au mode de réalisation décrit et représenté mais l'homme du métier saura y apporter toute variante conforme au contenu des revendications.

Non couvert par l'invention, on pourra prévoir que l'enveloppe externe du conduit conforme à l'invention ne comporte pas d'encoches mais des portions de paroi plus souples. Par ailleurs, l'ensemble de l'enveloppe externe peut être réalisée avec un matériau plus souple que celui constituant la cloison intérieure.

Ainsi l'élément longitudinal monobloc du conduit est réalisé par un moulage bi-matière.

## Revendications

1. Conduit (10) flexible s'étendant en longueur selon un axe longitudinal (X), en hauteur suivant un premier axe transversal (Z) et en largeur suivant un second axe transversal (Y), ces trois axes (X, Y, Z) étant perpendiculaires entre eux, et comprenant au moins un élément longitudinal (100) monobloc formé d'une enveloppe externe (110) délimitant un espace intérieur (11) et d'au moins une cloison intérieure (120) qui, en hauteur, s'élève selon ledit premier axe transversal (Z) et qui sépare, selon ledit axe longitudinal (X), ledit espace intérieur en deux compartiments longitudinaux (A, B) pour le logement d'éléments allongés tels que des fils ou des câbles électriques isolés et/ou des fibres optiques, **caractérisé en ce que** :
- ladite enveloppe externe (110) et ladite cloison intérieure (120) comportent chacune, ponctuellement, plusieurs zones de flexibilité régulièrement réparties le long dudit axe longitudinal (X),
- lesdites zones de flexibilité de ladite enveloppe externe (110) sont formées par des encoches (111) orientées selon ledit second axe transversal (Y),
- lesdites zones de flexibilité de ladite cloison intérieure (120) sont formées par des amincissements de paroi (121) s'étendant sur toute la hauteur de ladite cloison intérieure (120)
de sorte que, le long dudit axe longitudinal (X), l'élément longitudinal (100) est flexible autour dudit premier axe transversal (Z) et est rigide autour de l'axe longitudinal (X) et du second axe transversal (Y) afin que ledit élément longitudinal (100) soit adapté à suivre un trajet (C1 ;C2 ;C3) courbe situé dans un plan (P1 ; P2) perpendiculaire audit premier axe transversal (Z).

2. Conduit (10) selon la revendication 1, dans lequel ladite cloison intérieure (120) comporte à chacune de ses deux extrémités (E1, E2) des moyens d'accouplement selon ledit axe longitudinal (X) à une cloison intérieure d'un autre élément longitudinal du même type.

3. Conduit (10) selon la revendication 2, dans lequel lesdits moyens d'accouplement sont des moyens d'emboîtage (126, 127).

4. Conduit (10) selon l'une des revendications précédentes, qui comporte au moins deux éléments longitudinaux (100) monoblocs placés en vis-à-vis et assemblés par des moyens d'assemblage qui s'étendent selon ledit premier axe transversal (Z) de sorte que lesdites cloisons intérieures (120) desdits éléments longitudinaux (100) se raccordent par leur tranche longitudinale (124).

5. Conduit (10) selon la revendication précédente, dans lequel lesdits moyens d'assemblage sont des moyens d'encliquetage issus de chaque cloison intérieure (120).

6. Conduit (10) selon la revendication précédente, dans lequel chaque cloison intérieure (120) comprend une alternance de dents d'encliquetage (128A) situées en saillie de sa tranche longitudinale (124) et de bords d'accrochage (125A) pour lesdites dents d'encliquetage, lesdits bords d'accrochage (125A) étant situés en retrait de sa tranche longitudinale (124).

7. Conduit (10) selon la revendication précédente, dans lequel chaque cloison intérieure (120) comprend une série monobloc de chaînons liés par des liaisons formant charnières, un chaînon (122) sur deux comportant une paire de pattes d'encliquetage (128) qui s'étendent en saillie de la tranche longitudinale (124) de ladite cloison et un chaînon (123) sur deux comportant un logement (125) débouchant sur la tranche longitudinale (124) de ladite cloison et muni intérieurement de bords d'accrochage (125A) pour la paire de pattes d'encliquetage (128).

8. Conduit (10) selon l'une des revendications précédentes, dans lequel ladite enveloppe externe (120) présente un profil courbe suivant un arc de cercle et forme des ailes (112A) courbes de part et d'autre de ladite cloison intérieure (120).

## Patentansprüche

1. Flexible Rohrleitung (10), die sich in der Länge entlang einer Längsachse (X), in der Höhe entlang einer ersten Querachse (Z) und in der Breite entlang einer zweiten Querachse (Y) erstreckt, wobei die drei Achsen (X, Y, Z) zueinander in rechten Winkeln stehen, und die wenigstens ein einstückiges längliches Element (100) aufweist, das aus einer einen Innenraum (11) begrenzenden äußeren Hülle (110) und wenigstens einer inneren Wandung (120) gebildet ist, die sich in der Höhe entlang der ersten Querachse (Z) erstreckt und die den Innenraum entlang der Längsachse (X) in zwei Längsabschnitte (A, B) zum Unterbringen von länglichen Elementen wie zum Beispiel Drähten oder isolierten elektrischen Kabeln und/oder optischen Fasern aufteilt, **dadurch gekennzeichnet, daß**
- die äußere Hülle (110) und die innere Wandung (120) jeweils punktförmig mehrere entlang der Längsachse (X) gleichmäßig verteilte Flexibilitätsbereiche aufweisen,
- die Flexibilitätsbereiche der äußeren Hülle (110) durch nach der zweiten Querachse (Y) ausgerichtete Einkerbungen (111) gebildet sind,
- die Flexibilitätsbereiche der inneren Wandung (120) durch Wandungsverdünnungen (121) gebildet sind, die sich über die gesamte Höhe der inneren Wandung (120) erstrecken,
so daß das längliche Element (100) entlang der Längsachse (X) um die erste Querachse (Z) flexibel und um die Längsachse (X) und die zweite Querachse (Y) steif ist, damit das längliche Element (100) geeignet ist, einem gekrümmten Weg (C1; C2; C3) zu folgen, der in einer zur ersten Querachse (Z) senkrechten Ebene (P1; P2) liegt.

2. Rohrleitung (10) gemäß Anspruch 1, bei der die innere Wandung (120) an jedem ihrer beiden Enden (E1, E2) Mittel zum Ankoppeln entlang der Längsachse (X) an eine innere Wandung eines anderen länglichen Elements des gleichen Typs aufweist.

3. Rohrleitung (10) gemäß Anspruch 2, bei der die Ankopplungsmittel Mittel zum Ineinanderstecken (126, 127) sind.

4. Rohrleitung (10) gemäß einem der vorangehenden Ansprüche, die wenigstens zwei einstückige längliche Elemente (100) aufweist, die einander gegenüber liegen und mit Verbindungsmitteln verbunden sind, die sich entlang der ersten Querachse (Z) erstrecken, so daß sich die inneren Wandungen (120) der länglichen Elemente (100) an deren Längskante (124) miteinander verbinden.

5. Rohrleitung (10) gemäß dem vorangehenden Anspruch, bei der die Verbindungsmittel aus jeder inneren Wandung (120) hervorgehende Mittel zum Ineinanderstecken sind.

6. Rohrleitung (10) gemäß dem vorangehenden Anspruch, bei der jede innere Wandung (120) einen Wechsel aus aus der Längskante (124) hervorstehenden Einsteckzähnen (128A) und Einhakrändern (125A) für die Einsteckzähne aufweist, wobei die Einhakränder (125A) gegenüber der Längskante (124) zurückgezogen angeordnet sind.

7. Rohrleitung (10) gemäß dem vorangehenden Anspruch, bei der jede innere Wandung (120) eine einstückige Reihe von durch Scharniere bildende Verbindungen verbundenen Kettengliedern aufweist, wobei jedes zweite Kettenglied (122) ein Paar Einhaklaschen (128) aufweist, die sich aus der Längskante (124) hervor erstrecken, und jedes zweite Kettenglied (123) eine Aufnahme (125) aufweist, die an der Längskante (124) der Wandung mündet und innen mit Einhakrändern (125A)für das Paar Einhaklaschen (128) versehen ist.

8. Rohrleitung (10) gemäß einem der vorangehenden Ansprüche, bei der die äußere Hülle (110) ein einem Kreisbogen entsprechendes gekrümmtes Profil aufweist und beiderseits der inneren Wandung (120) gekrümmte Flügel (112A) bildet.

## Claims

1. A flexible conduit (10) extending lengthwise along a longitudinal axis (X), hightwise along a first transverse axis (Z), and widthwise along a second transverse axis (Y), these three axes (X, Y, Z) being mutually perpendicular, the conduit comprising at least one single-piece longitudinal element (100) formed by an outer casing (110) defining an internal space (11) and by at least one internal partition (120) that rises hightwise along said first transverse axis (Z) and that separates said internal space along said longitudinal axis (X) into two longitudinal compartments (A, B) for housing elongate elements such as insulated electric cables or wires and/or optical fibers, the conduit being **characterized in that**:
. said outer casing (110) and said internal partition (120) each include a plurality of localized flexibility zones regularly distributed along said longitudinal axis (X);
. said flexibility zones of said outer casing (110) are formed by notches (111) oriented along said second transverse axis (Y); and
. said flexibility zones of said internal partition (120) are formed by wall constrictions (121) extending over the full height of said internal partition (120)
in such a manner that, along said longitudinal axis (X), the longitudinal element (100) is flexible about said first transverse axis (Z) and is rigid about the longitudinal axis (X) and the second transverse axis (Y) so that said longitudinal element (100) is adapted to follow a curved path (C1; C2; C3) situated in a plane (P1; P2) perpendicular to said first transverse axis (Z).

2. A conduit (10) according to claim 1, wherein said internal partition (120) includes coupling means at each of its two ends (E1, E2) for coupling along said longitudinal axis (X) to an internal partition of another longitudinal element of the same type.

3. A conduit (10) according to claim 2, wherein said coupling means are interlocking means (126, 127).

4. A conduit (10) according to any preceding claim, comprising at least two single-piece longitudinal elements (100) placed facing each other and assembled together by assembly means that extend along said first transverse axis (Z) so that said internal partitions (120) of said longitudinal elements (100) are connected together via their longitudinal edge faces (124).

5. A conduit (10) according to the preceding claim, wherein said assembly means are latch means projecting from each internal partition (120).

6. A conduit (10) according to the preceding claim, wherein each internal partition (120) comprises an alternation of latch teeth (128A) projecting from its longitudinal edge face (124) and catch edges (125A) for said latch teeth, said catch edges (125A) being set back from its longitudinal edge face (124).

7. A conduit (10) according to the preceding claim, wherein each internal partition (120) comprises a single-piece series of links connected together by hinge-forming connections, one out of every two links (122) including a pair of latch tabs (128) projecting from the longitudinal edge face (124) of said partition and one out of every two links (123) including a housing (125) opening out into the longitudinal edge face (124) of said partition and provided internally with catch edges (125A) for catching the pair of latch tabs (128).

8. A conduit (10) according to any preceding claim, wherein said outer casing (110) exhibits a curved profile following a circular arc and forms curved fins (112A) on either side of said internal partition (120).
